# EUROPÄISCHE PATENTSCHRIFT

(11) **EP 3 744 694 B1**
(45) Veröffentlichungstag und Bekanntmachung des Hinweises auf die Patenterteilung: **08.09.2021**
(21) Anmeldenummer: 19177241.7
(22) Anmeldetag: 29.05.2019
(51) Int. Cl.: C03B 5/24, C03B 5/03

(54) **GLASOFEN**
GLASS FURNACE
FOUR À VERRE

(43) Veröffentlichungstag der Anmeldung: 02.12.2020
(73) Patentinhaber: Heinz-Glas GmbH & Co. KGaA, 96355 Tettau (DE)
(72) Erfinder: Krischke, Alfred, 96355 Tettau (DE)
(74) Vertreter: Glück Kritzenberger Patentanwälte PartGmbB

(56) Entgegenhaltungen:
- DE-A1- 3 824 829
- US-A- 4 932 035
- US-A- 4 961 772

## Beschreibung

Die Erfindung betrifft einen Glasofen mit mindestens einer Glasschmelzwanne für den wahlweise kontinuierlichen oder diskontinuierlichen Betrieb mit räumlich getrennten und über Verbindungen miteinander verbundenen Wannenbereichen für die Rauhschmelze, die Läuterung und die Zwischenspeicherung von erschmolzenem Glas, wobei alle Wannenbereiche elektrische Heizelektroden zur Beheizung aufweisen. Der Glasofen hat weiterhin eine Steuerung für die Regelung der Entnahmemenge und/oder für den Füllstand im Wannenbereich für die Zwischenspeicherung.

### Technologischer Hintergrund der Erfindung:

Derzeit wird in der Glasindustrie Glas in großen, meist erdgasbefeuerten kontinuierlich betriebenen Öfen geschmolzen. Diese Schmelzwannen sind so optimiert, dass sie in einem kontinuierlichen Betrieb unter stationären Bedingungen möglichst CO2-neutral Glas produzieren.

Für die energetische Optimierung der Öfen wird ein verfahrenstechnisch hoher Aufwand betrieben, z.B. über den Einsatz von Rekuperatoren oder Regeneratoren, um den Energieverlust durch die oberflächige Beheizung zu begrenzen. Die Materialzusammenstellung der Isolierung der Öfen ist auf die Korrosionsbeständigkeit gegenüber konstantem Füllstand optimiert.

### Stand der Technik:

Elektrisch betriebene Wannen sind zwar bisher für Spezialgläser verfügbar, haben aber zum einen keine verfahrenstechnische Lösung für die Abbildung der Prozessabfolge von der Rauhschmelze bis hin zum qualitativ hochwertigen Produkt. Zum anderen verfügen sie nicht über ein Materialkonzept, welches einen semi-diskontinuierlichen Betrieb erlaubt, d.h. einen jederzeit möglichen Wechsel zwischen einer kontinuierlichen und diskontinuierlichen Betriebsweise.

Im Patent EP-0 185 178 B1 ist ein diskontinuierlich betriebener, elektrisch beheizter Glasofen beschrieben, der diskontinuierlich Glas schmilzt. Der Ofen enthält eine horizontale Kammerung, wobei die untere immer mit geschmolzenem Glas gefüllt und mit einer Isolierung mit hoher Wärmekapazität ausgestattet ist. Dies verhindert ein zu starkes Auskühlen in den Schmelzpausen. Der Ofen ist nicht für einen kontinuierlichen Betrieb konzipiert.

Die Druckschriften US-4,932,035 und DE-3903016C2 beschreiben eine dreiteilige Glaswanne, in der konstruktiv die Bereiche Rauhschmelze, Läuterung und Ausarbeitung (Homogenisierung) getrennt sind. Die Wanne wird kontinuierlich oder diskontinuierlich betrieben und nur der Wannenbereich für die Rauhschmelze wird elektrisch beheizt. Die beiden anderen Wannenbereiche für die Läuterung und Zwischenspeicherung werden mit Gas beheizt.

Eine Glaswanne mit einem Molybdänbewehrung ist in der DE-38 24 829 A1 beschrieben. Ein Materialgemenge wird in dem Außenring einer konzentrischen Anordnung aufgebracht und taucht unter einem Molybdänrohr in einen in Wannenbereiche unterteilten Innenbereich der Wanne. Das System kann nicht diskontinuierlich betrieben werden, da kein Speicher vorhanden ist, in dem erschmolzenes Glas gepuffert werden kann. Die US 4,932,035 zeigt die Merkmale des Oberbegriffs des Anspruchs 1.

US4961772 A offenbart in einen Glasofen, der kontinuierlich beschickt und diskontinuierlich geleert wird. Der Ofen besitzt drei Wannenbereiche, die alle elektrisch beheizt werden, wobei die letzte der drei Kammern der flexiblen Zwischenspeicherung dient.

### Aufgabe der Erfindung:

Die Erfindung hat zum Ziel, einen Glasofen zu schaffen, welcher dem Betreiber eine kostengünstige energieoptimierte Glasproduktion in kontinuierlicher als auch nicht kontinuierlicher Betriebsweise unter Einhaltung aller gängigen Qualitätsanforderungen ermöglicht. Diese Aufgabe wird mit einem Glasofen gemäß Anspruch 1 gelöst. Die Aufgabe wird weiterhin mit einem Verfahren nach Anspruch 16 gelöst. Vorteilhafte Weiterbildungen der Erfindung sind Gegenstand der zugeordneten abhängigen Ansprüche.

### Allgemeine Beschreibung der Erfindung:

Der erfindungsgemäße Glasofen hat mit mindestens eine Glasschmelzwanne, die für den wahlweise kontinuierlichen oder diskontinuierlichen Betrieb konzipiert ist. Hierfür hat die Glasschmelzwanne räumlich getrennte und über Verbindungen, wie z.B. Tauch- oder Überlaufwehre, miteinander verbundene Wannenbereiche für die Rauhschmelze, für die Läuterung und für die Zwischenspeicherung von erschmolzenem Glas, wobei alle drei Wannenbereiche jeweils elektrische Heizelemente zur Beheizung aufweisen.

In dem Gasofen wird nach dem Antempern mit Gasfeuerung oder resistiver Erwärmung der Normalbetrieb direkt-resisitiv, insbesondere mit Mo-Elektroden durchgeführt. Die Anlage kann natürlich auch induktiv, elektromagnetisch oder anderweitig mit einer elektrischen Heizquelle betrieben werden. Die Heizelektroden können somit durch alle denkbaren elektrischen Beheizungsarten realisiert sein.

Mittels der getrennten Wannenbereiche, insbesondere mittels des gegenüber den Wannenbereichen für die Rauhschmelze und die Läuterung deutlich größeren Wannenbereichs für die Zwischenspeicherung, ist es möglich, den Glasofen zyklisch unter Ausnutzung der schwankenden Verfügbarkeit günstiger regenerativer Energie unter gleichzeitiger Flexibilisierung der Produktionsplanung zu betreiben. Vorzugsweise ist daher der Wannenbereich für die Zwischenspeicherung mindestens zweimal, vorzugsweise mindestens dreimal so groß wie der größere der anderen Wannenbereiche. Der Glasofen ist gegenüber der Atmosphäre abgeschlossen und hat somit einen abgeschlossenen Gasraum über den Wannenbereichen. Vorzugsweise sind hierbei die Gasräume über den Wannenbereichen separiert, so dass dort die Gaszusammensetzung z.B. durch Inertgas-Zufuhr für den Gasraum der einzelnen Wannenbereiche unabhängig von den Gasräumen der anderen Wannenbereiche eingestellt werden kann.

Basis beim Betrieb des Glasofens ist die Verwendung von Strom als Energiequelle, wobei die aktuellen Stromverfügbarkeitsparameter, wie z.B. Verfügbarkeit regenerativer Energie, wie z.B. Solarstrom oder Stromkosten sehr leicht als Kostenparameter in der Produktion berücksichtigt werden können. Durch die rein elektrische Beheizung werden zudem Wärmeverluste über die Brennergase und der Einsatz von Rekuperatoren vermieden, was die Anlagentechnik vereinfacht und konvektive Wärmeverluste vermeidet.

Um eine Glasschmelze zu erhalten, die einen hohen Grad an Homogenität aufweist, ist es nötig, den Glasfluss in der Schmelzwanne zu steuern. Dies ist nötig, damit die Schmelze bei kontinuierlich betriebenen Wannen eine bestimmte Zeit darin verbleiben kann. Die Glasschmelze durchläuft hierbei die mehreren separierten Wannenbereiche, die unterschiedliche Temperaturen aufweisen, wodurch die Schmelze Schritt für Schritt unterschiedliche Behandlungen erfährt. Hierdurch wird eine hohe Qualität des hergestellten Glases erzielt.

Der Glasofen hat eine Steuerung oder Regelung des von der Glasschmelzwanne entnommenen Volumenstroms an Glasschmelze und/oder für den Füllstand in dem Wannenbereich für die Zwischenspeicherung. Weiterhin weist die Steuerung einen Dateneingang für Energieverfügbarkeitsparameter, wie z.B. Verfügbarkeit regenerativer Energie oder Energiekosten, und eine Verarbeitungseinheit auf, die konzipiert ist, die über den Dateneingang erhaltenen Daten zu Steuerdaten als Basis für die oben genannte Regelung auszuwerten. Auf diese Weise lässt sich der Glasofen mit minimierten Energiekosten bzw. mit einer gewünschten Energieart, z.B. regenerativer Energie betreiben. Der Dateneingang kann hierbei durch eine Verbindung zu einem Datennetzwerk als auch durch eine Eingabeeinheit gebildet sein, die eine manuelle Eingabe von Energiepreisen gestattet. Der Dateneingang kann auch mit einer Vorhersageeinheit verbunden sein, die voraussichtliche Verfügbarkeitsdaten liefert. Wenn z.B. Solarstrom zum Betrieb des Glasofens verwendet wird, so liegt dieser zyklisch schwankend am Tag vor. In der Datenvorhersageeinheit der Steuerung können z.B. diese zyklisch schwankenden Verfügbarkeitsdaten abgelegt sein, an denen die Steuerung sich orientieren kann. Natürlich können Verfügbarkeitsdaten bzw. Strompreise auch manuell eingegeben werden.

Produktionstechnisch wird den Energieverfügbarkeitsdaten Rechnung getragen werden, indem z.B. während der Verfügbarkeitszeit von Solarstrom oder günstigem Strom der Wannenbereich für die Zwischenspeicherung vollständig gefüllt wird, während in den Abendstunden, wenn keine Sonne scheint, oder zu Zeiten hoher Preise der Wannenbereich für die Zwischenspeicherung geleert wird. Die Produktion wird somit unabhängiger von der aktuellen Verfügbarkeit einer bestimmten Energieart oder von Energiekosten.

Die Erfindung ermöglicht damit eine flexible Glasschmelzwanne, die zu Zeiten günstiger bzw. zu Zeiten vorhandener regenerativer Energie Glas erschmelzen kann, dieses Glas energetisch günstig zwischenspeichert, um auch zu Zeiten höherer Energiepreise bzw. Nichtverfügbarkeit einer bestimmten Energieart (z.B. regenerativ) kostengünstig produzieren zu können.

Die Erfindung beschreibt somit einen Glasofen, welcher mit einem neuen elektrischen Heiz- und Temperaturmanagementkonzept in der Lage ist, instationär betrieben zu werden und so auf Schwankungen auf dem Strommarkt sowie produktionsbedingte Auslastungen ohne Qualitätsverlust und ohne höheren Energieaufwand zu reagieren.

Durch den Einsatz von Verbindungen zwischen den Wannenbereichen, wie z.B. oberhalb oder unterhalb von Wehren und steuerbaren Heizelektroden in der Nähe der Verbindungen lässt sich die Strömung der Glasschmelze zwischen den Wannenbereichen z.B. über ihre Viskosität steuern. Vorzugsweise ist deshalb die Regelung der Heizleistung in den separaten Wannenbereichen mit dem Volumenstrom der Glasschmelze gekoppelt, womit auch dieser Produktionsparameter in Abhängigkeit von den Energieverfügbarkeitsdaten geregelt werden kann. Zudem ist es dadurch möglich, einen Teil der Schmelze, die bereits am Ende der Schmelzwanne, d.h. im Wannenbereich für die Zwischenspeicherung angelangt ist, wieder zum Wanneneingang, d.h. zum Wannenbereich für die Rauhschmelze rückzuführen, um eine gute Durchmischung und auch einen Wärmetransport zu erreichen.

Die Verarbeitungseinheit der Steuerung hat vorzugsweise einen Speicher mit mehreren Speicherplätzen für den Verlauf der Energiepreise über einen bestimmten Zeitraum. Die Steuerung hat vorzugsweise weiterhin eine Vorhersageeinheit, die die zu erwartenden Energiepreise in der nahen Zukunft aus dem bisherigen Verlauf der Energiepreise ableitet. Auf diese Weise kann die Steuerung den Füllstand im Speicher und/oder die abgegebene Menge an Glasschmelze derart regeln dass möglichst günstige Energiekosten bei der Glaserzeugung erhalten werden. Die Auswerteeinheit und die Vorhersageeinheit können integriert ausgebildet oder in separaten Modulen angeordnet sein.

Vorzugsweise weist der Glasofen eine Regelung auf, die mit einem Füllstandsensor im Wannenbereich für die Zwischenspeicherung verbunden ist. Auf diese Weise kann die Regelung den aktuellen Füllstand des Speichers für die energieoptimierte Nutzung des Glasofens berücksichtigen. Auf diese Weise kann somit eruiert werden, wann eine Auffüllung des Speichers notwendig ist, und kann hierfür die Evaluierung der Energieverfügbarkeitsdaten berücksichtigen. Zudem kann die Regelung so den aktuellen Füllstand im Speicher für die anstehende Produktionskapazität berücksichtigen. Falls so z.B. der Speicher weitgehend leer ist, können die Energiepreise oder die Energieverfügbarkeit nur über einen relativ kurzen Zeitraum berücksichtigt werden, da der Speicher alsbald aufzufüllen ist. Ist der Speicher relativ voll, können längere Zeitabschnitte für die Energieverfügbarkeitsdaten berücksichtigt werden. Eventuell kann so z.B. die Produktion allein mit der Glasschmelze aus dem Speicher aufrechterhalten werden, bis Solarstrom wieder verfügbar ist.

Generell können die Wannenbereiche unterschiedliche Formen haben. In einer bevorzugten Ausführungsform sind alle Wannenbereiche rechteckig, da sich die Wannenbereiche dann einfach nebeneinander anordnen lassen. Die Wannenbereiche für die Rauhschmelze und der Wannenbereich für die Läuterung sind dann vorzugsweise an zwei benachbarten Seiten des Wannenbereichs für die Zwischenspeicherung angeordnet, und erstrecken sich vorzugsweise über die gesamte Seitenlänge, so dass diese den Wannenbereich für die Zwischenspeicherung L-förmig umgeben. Auf diese Weise wird der Glasofen wärmetechnisch optimiert, weil der Wannenbereich für die Zwischenspeicherung von den wärmeren Wannenbereichen für die Rauhschmelze und die Läuterung umgeben ist. Zudem ist eine rechteckige Form der einzelnen Wannenbereiche bereits wärmeemissionstechnisch vorteilhaft, weil die Grenzflächen benachbarter Wärmebereiche so formschlüssig an die Außenfläche gesetzt werden können.

In einer bevorzugten alternativen Bauform sind alle Wannenbereiche rechteckig, und der Wannenbereich für die Rauhschmelze und ein zweigeteilter Wannenbereich für die Läuterung sind an drei benachbarten Seiten des Wannenbereichs für die Zwischenspeicherung angeordnet und erstrecken sich vorzugsweise über die gesamte Seitenlänge. Auf diese Weise wird der Wannenbereich für die Zwischenspeicherung von den anderen Wannenbereichen U-förmig umgeben und damit optimal geheizt, wobei zudem deren wärmeabstrahlende Außenfläche minimiert wird. Diese Ausführung ist zu wählen, wenn die Ausarbeitungstemperatur, d.h. die Abgabetemperatur am Auslass hoch sein soll.

In einer weiteren bevorzugten Ausführungsform sind alle Wannenbereiche rechteckig, und der Wannenbereich für die Rauhschmelze ist an einer ersten Seite des Wannenbereichs für die Läuterung angeordnet, während der Wannenbereich für die Zwischenspeicherung an einer der ersten Seite gegenüberliegenden zweiten Seite des Wannenbereichs für die Läuterung angeordnet ist. Auf diese Weise sind die drei Wannenbereiche kaskadenförmig hintereinander angeordnet. Diese Ausführung wird verwendet, wenn zur Läuterung eine besonders hohe Temperatur benötigt wird, da hier die Außenfläche des Wannenbereichs für die Läuterung bzw. Homogenisierung mit nur zwei Außenflächen gering ist. Vorzugsweise sind hierbei die aneinander grenzenden Seiten der Wannenbereich länger als die quer dazu verlaufenden Seiten. Die minimiert weiterhin die wärmeabstrahlende und damit temperatursenkende Außenfläche.

In einer bevorzugten Ausführungsform der Erfindung sind alle Wannenbereiche rund, insbesondere kreisrund ausgeführt. Dies reduziert die verlustbehaftete Abstrahlung über die Außenwände. Vorzugsweise sind die Wannenbereich dann ineinander verschachtelt, z.B. konzentrisch zueinander angeordnet, was durch gemeinsame Wände und somit eine reduzierte Fläche der Außenwand weiterhin Energie spart.

Obwohl auch die komplette Wannenauskleidung aus Molybdän herstellbar wäre, wenn die zugeführte Atmosphäre ausreichend inertisiert ist, weist der Glasofen eine Mo-Isolierung vorzugsweise im Wannenbereich für die Zwischenspeicherung auf. Da der Glasofen auch diskontinuierlich betrieben wird, kann der Pegel der Glasschmelze in dem Wannenbereich für die Zwischenspeicherung stark variieren. Da an der Drei-Phasen-Grenze Schmelze/Wannenmaterial/Gasraum (über dem Wannenbereich) eine sehr starke Korrosion auftritt, ist es vorteilhaft, wenn der Wannenbereich für die Zwischenspeicherung zumindest in dem Bereich des schwankenden Pegels mit Molybdän ausgekleidet ist, welches gegen Korrosion sehr unempfindlich ist. Statt Molybdän können auch andere Refraktärmetalle wie Wolfram als auch Platingruppenmetalle und ihre Legierungen verwendet werden.

Insbesondere in diesem Fall ist es vorteilhaft, wenn der Gasraum über dem Wannenbereich für die Zwischenspeicherung mit einer Inertgaszufuhr verbunden ist. Molybdän reagiert mit dem Luftsauerstoff. Die korrosionsresistenten Eigenschaften des Molybdäns können somit am besten genutzt werden, wenn die Atmosphäre über dem Wannenbereich für die Zwischenspeicherung inert ist, also z.B. Stickstoff verwendet wird.

In einer bevorzugten Ausführungsform der Erfindung sind die Wannenbereiche thermisch miteinander verbunden. Dies bedeutet, dass zwischen den Wannenbereichen angeordnete Wände oder Wehre nicht thermisch isoliert sind. Auf diese Weise kann die Wärme eines Wannenbereichs für einen anderen Wannenbereich genutzt werden. Dies reduziert den gesamten Energieaufwand beträchtlich.

Insbesondere in diesem Fall ist/sind vorzugsweise der Wannenbereich für die Rauhschmelze und/ oder der Wannenbereich für die Läuterung thermisch mit dem Wannenbereich für die Zwischenspeicherung verbunden. Der Wannenbereich für die Rauhschmelze und die Läuterung geben hierdurch Wärme an den in der Regel größeren Wannenbereich für die Zwischenspeicherung ab, womit diese nicht so stark beheizt werden braucht. Andererseits ist die energieintensive Außenfläche der ersten beiden Wannenbereiche hierdurch reduziert, was nach außen abgestrahlte Wärme reduziert.

Vorzugsweise sind die Gasräume über den einzelnen Wannenbereichen getrennt, so dass die in den einzelnen Phasen entstehenden Gasströme geleitet werden können. So ist es möglich, dass die meisten Läutergase in dem Gasraum über den Wannenbereich der Rauhschmelze abgezogen werden können. Durch die Trennung der beiden Gasräume ist es möglich, die beim Erschmelzen anfallenden Alkaliendämpfe, HF, SO2 gezielt abzuführen, wodurch die Möglichkeit besteht, die in den einzelnen Bereichen ablaufenden Prozesse bei der Glasschmelze besser untersuchen und regeln zu können.

In einer bevorzugten Ausführungsform der Erfindung sind die unterschiedlichen Wannenbereiche über Tauch- und Überlaufwehren voneinander getrennt, die Verbindungsbereiche definieren, deren Durchlassmenge mittels Stellgliedern steuerbar ist. Diese Stellglieder können mechanische Stellglieder sein, die den Durchlassquerschnitt der Wehre verändern und/oder Heizelektroden, die die Temperatur und damit auch die Viskosität der Schmelze im Bereich Verbindungsbereich der Wehre verändern, und damit den das Wehr passierenden Volumenstrom an Glasschmelze.

Vorzugsweise weist der Wannenbereich für die Zwischenspeicherung wenigstens eine steuerbare Entnahmeeinrichtung für die Glasschmelze auf. Auf diese Weise wird die Entnahme gemäß den Ansprüchen 1 und 16 nach internen Vorgaben optimiert, z.B. in Anpassung an die Kosten für regenerative (elektrische) Energie. Zu Zeiten hoher Energiekosten wird somit der Wannenbereich für die Zwischenspeicherung sukzessive entleert, während er in Zeiten niedriger Energiekosten aufgefüllt werden kann.

Vorzugsweise ist die Entnahmeeinrichtung für die Glasschmelze elektrisch beheizbar und damit thermisch gesteuert. Die Entnahmegeschwindigkeit kann so z.B. über die Viskosität der Glasschmelze gesteuert werden.

Während ein Wärmeaustausch zwischen den Wannenbereichen erwünscht ist, sind die Außenwände des Glasofens durch eine - insbesondere mehrschichtige - Wärmeisolierung, thermisch isoliert. Dies reduziert den gesamten Energieaufwand für die Glasherstellung und die Erhaltung der notwendigen Temperatur für den Wannenbereich für die Zwischenspeicherung.

Vorzugsweise weist der Wannenbereich für die Zwischenspeicherung wenigstens das doppelte, vorzugsweise wenigstens das dreifache Volumen des Wannenbereichs für die Läuterung und/oder des Wannenbereichs für die Rauhschmelze auf. Über die hohe Kapazität des Speichers lassen sich somit Schwankungen der Energiepreise durch kurzfristigen erhöhten oder verringerten Zugriff auf die im Speicher befindliche Glasschmelze wirkungsvoll begegnen. Durch das hohe Volumen des Speichers können nicht nur sehr kurzfristige Schwankungen, sondern auch stundenweise Schwankungen berücksichtigt werden, so dass Glas zu bestmöglichen Kosten bzw. während der Verfügbarkeit von Solarstrom hergestellt werden kann.

Vorzugsweise enthält mindestens einer der Wannenbereiche, vorzugsweise alle drei Wannenbereiche, bevorzugt aber zumindest der Wannenbereich für die Rauhschmelze eine resistiv oder gasbetriebene Antemperheizung, um somit diesen Wannenbereich möglichst schnell auf die erforderliche Arbeitstemperatur bringen zu können. Da das Antempern einen eher selten durch geführten Verfahrensschritt darstellt, kann es auch unter Nutzung fossiler Energieträger unterstützt werden, während der "normale" Betrieb des Glasofens allein auf der Nutzung elektrischer Energie basiert.

Zwischen den Wannenbereichen werden vorzugsweise nur dünne Materialien zur Abtrennung eingesetzt, wodurch ein mittig angeordneter Wannenbereich für die Zwischenspeicherung überhitzt werden kann. Dieser Wannenbereich umgeben von Wannenbereichen auf ebenfalls hohem, aber leicht niedrigerem Temperaturniveau, kann dann zu Zeiten ohne verfügbare regenerative Energie an die beiden anderen Wannenbereiche abgegeben werden, was zu einer energieoptimierten Nutzung führt.

Die Verbindungen zwischen den Wannenbereichen, d.h. die Wehre können vorzugsweise dazu genutzt werden, mit der regelbaren Strömungsführung Läuterungsaufgaben zu erfüllen, womit auch bei energieoptimierter Herstellung ein hoher Qualitätsstandard des hergestellten Glases erzielt wird.

Die Erfindung betrifft auch ein Verfahren zum Betreiben eines wenigstens eine Glasschmelzwanne enthaltenen Glasofens, wie er oben beschrieben wurde. Erfindungsgemäß wird der von der Glasschmelzwanne entnommene Volumenstrom an Glasschmelze und/oder der Füllstand im Speicher in Abhängigkeit von der Verfügbarkeit günstiger regenerativer Energie geregelt, womit der Glasofen mit optimierter Energieverfügbarkeit bzw. Energiekosten betrieben werden kann.

Erfindungsgemäß weist hierfür der Glasofen eine Steuerung auf, und die Steuerung hat einen Dateneingang für Energieverfügbarkeitsdaten, insbesondere regenerativer Energie, z.B. über ein soziales Kommunikationsnetzwerk, wie z.B. Internet oder Datenports von Energielieferanten oder eine interne Vorhersageeinheit, in der z.B. zyklisch schwankende Verfügbarkeitsdaten oder rechnerisch erarbeitete Verfügbarkeitsdaten auch für die Zukunft abgelegt sind. Die Steuerung hat weiterhin eine Verarbeitungseinheit, die die über den Dateneingang erhaltenen Daten zu Steuerdaten als Basis für die oben genannte Regelung auswertet. Somit können stundenweise Änderungen, bei einem sehr großen Speicher auch tageweise Änderungen der Energiepreise so berücksichtigt werden, dass während der Zeit günstiger Energiepreise der Speicher gefüllt wird, während er zu Zeiten ungünstiger Energiepreise geleert wird.

Aufgrund der Segmentierung des Glasofens in mehrere Wannenbereiche, ist vorzugsweise die Atmosphäre in den Gasräumen über den einzelnen Wannenbereichen separat steuerbar. So sind vorzugsweise die Gasräume der einzelnen Wannenbereiche voneinander getrennt und vorzugsweise ist eine eigene Gaszufuhr für jeden Gasraum vorgesehen. In der dem Wannenbereich für die Rauhschmelze muss zudem neben den Ausgasungen aus dem Glas der mit dem Gemenge eingeschleppter Sauerstoff oder Wasserdampf ausgetrieben werden.

Vorzugsweise ist die Heizleistung in den separaten Wannenbereichen und/oder der über die Verbindungen fließende Volumenstrom an Glasschmelze und/oder der von der Glasschmelzwanne entnommene Volumenstrom an Glasschmelze in Abhängigkeit von der Verfügbarkeit günstiger regenerativer Energie regelbar. Somit können alle relevanten Produktionsparameter in Abhängigkeit von den Energiepreisen gesteuert werden, d.h. der Durchsatz des hergestellten Glases bzw. die Menge die zum Vorrat in den Speicher produziert wird, bzw. aus dem Speicher entnommen wird. Auf diese Weise kann zumindest kurzfristig immer zu optimalen Energiekosten produziert werden.

Vorzugsweise weist der Glasofen hierzu eine Steuerung auf, die über einen Dateneingang Energieverfügbarkeitsdaten, z.B. die Verfügbarkeit regenerativer Energie, z.B. Solarstrom oder Strompreise von einem Kommunikationsnetzwerk, von einer Vorhersageeinheit der Steuerung von einem Datenausgang von Energielieferanten oder über eine manuelle Eingabe abruft, und diese Daten zu Steuerdaten als Basis für die oben genannte Regelung auswertet. Auf diese Weise enthält die Steuerung selbsttätig die aktuellen Energieverfügbarkeitsdaten und kann entsprechend die Produktionsmenge bzw. den Füllstand im Speicher regeln.

Vorzugsweise wird bei einem diskontinuierlichen Betrieb des Glasofens der Füllstand in dem Wannenbereich für die Zwischenspeicherung über eine resistiv oder induktiv beheizte Entnahmeeinrichtung geregelt, d.h. über die Viskosität. Eine derartige Steuerung basiert ebenfalls auf der Nutzung elektrischer Energie, so dass eine Energieart zum Beheizen und Steuern des Glasofens verwendet wird. Die Betriebskosten zum Beheizen der Verbindungen zwischen den Wannenbereichen und/oder der Entnahmeeinrichtung können bei den Betriebskosten des gesamten Glasofens mit berücksichtigt werden.

Prinzipiell können in dem erfindungsgemäßen Glasofen Gemenge oder Glasscherben oder Mischungen aufgeschmolzen werden. Der Glasofen ist somit nicht auf eine bestimmte Beschickungsform begrenzt.

Vorzugsweise wird das Gemenge senkrecht oder waagerecht über Einlegersysteme dem Wannenbereich für die Rauhschmelze zugeführt. Das Einlegesystem ist mit einer Inertgasspülung ausgestattet, damit eine möglichst luftfreie Beschickung des Rauhschmelzebereichs erfolgt.

Vorzugsweise wird eine Füllstandsregelung über einen resistiv oder induktiv beheizten Drain zur Regelung des instationären Systems genutzt. Eine derartige Regelung ist günstig und einfach zu realisieren.

Es ist dem Fachmann klar, dass die obigen Ausführungsformen der Erfindung, und zwar vorrichtungstechnisch als auch apparatetechnisch in beliebiger Weise miteinander kombiniert werden können. Zudem können einzelne Komponenten des Anspruchs wie z.B. Wannenbereich einfach oder mehrfach oder mehrteilig vorgesehen sein.

Folgende Begriffe werden synonym verwendet: Läuterung - Homogenisierung; steuerbar - regelbar; Entnahmeeinrichtung - Drain; Wannenbereich für die Zwischenspeicherung - Speicher; Entnahmemenge - entnommener Volumenstrom; Energiekosten - Energiepreise; Wannenbereich - Modul; erster Wannenbereich - Wannenbereich für die Rauhschmelze; zweiter Wannenbereich - Wannenbereich für die Läuterung; dritter Wannenbereich - Wannenbereich für die Zwischenspeicherung; geschlossener Ofenraum - Ofenbehälter - Gasraum; Wehre - Trennwände; Tauchung - Tauchwehr;

### Kurzbeschreibung der Figuren:

Die Erfindung wird nachfolgend beispielsweise anhand der schematischen Zeichnung beschrieben. In dieser zeigen:
- Fig. 1: eine schematische Ansicht eines Glasofens, dessen Entnahmemenge in Abhängigkeit von Energiepreisen regelbar ist,
- Fig. 2a-c: eine schematische Aufsicht dreier Konzepte für die Anordnung der separaten Wannenbereiche in einer Glasschmelzwanne des Glasofens, und
- Fig. 3: eine schematische Aussicht auf einen runden Glasofen mit konzentrisch angeordneten Wannenbereichen.

### Detaillierte Figurenbeschreibung :

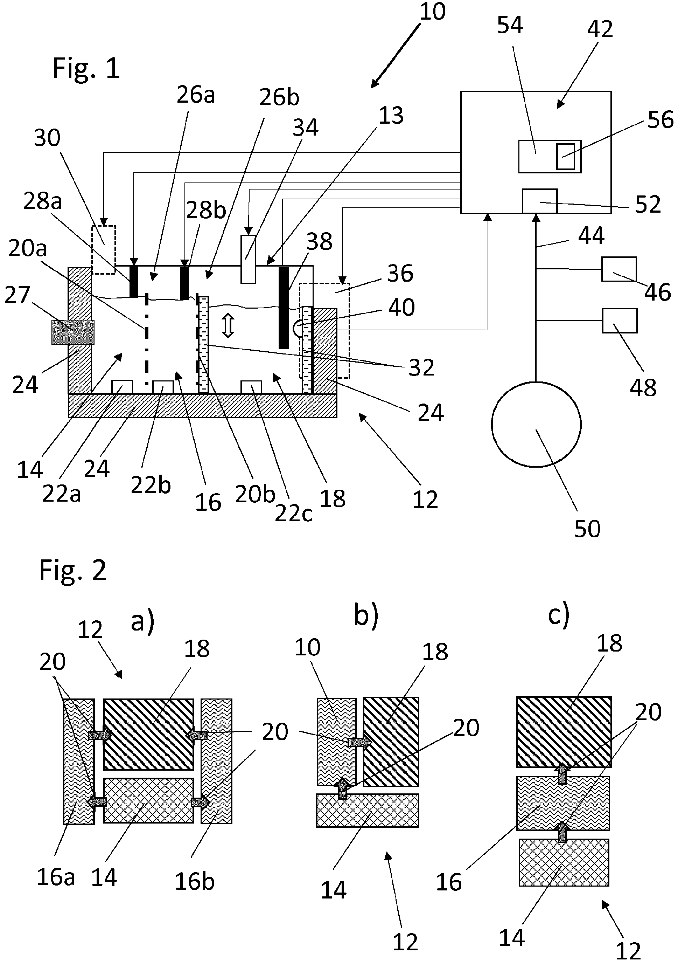

Fig. 1 zeigt einen Glasofen 10 mit einer Glasschmelzwanne 12, die drei Wannenbereiche 14, 16, 18 aufweist, die durch insbesondere thermisch nicht isolierende Abtrennungen 20a, 20b, in der Regel durch Tauchungen und zur Absicherung auch durch Überlaufwehre, voneinander getrennt sind. Der Glasofen ist zumindest weitgehend gasdicht ausgeführt, um eine Steuerung der Gasatmosphäre über den Wannenbereichen, z.B. eine Inertisierung zu ermöglichen. Dieser gasdichte Ofen ist zudem gegen die Bildung eines möglichen Überdrucks abgesichert (nicht dargestellt). Der erste Wannenbereich 14 ist der Wannenbereich für die Rauhschmelze, der darauffolgende zweite Wannenbereich 16 ist der für die Läuterung oder Homogenisierung und der dritte Wannenbereich 18 ist der für die Zwischenspeicherung. Dieser dritte Wannenbereich 18 ist deutlich größer als die beiden anderen, da das Volumen dieses Wannenbereichs für die Zwischenspeicherung maßgebend ist für die Optimierung der Energiekosten unter Berücksichtigung aktueller Energiepreise.

In jedem der Wannenbereich 14, 16, 18 sind elektrische Heizelemente 22a, 22b, 22c angeordnet, die eine separate Beheizung des entsprechenden Wannenbereichs 14, 16, 18 ermöglicht. Die gesamte Glasschmelzwanne ist von einer dicken, vorzugsweise mehrlagigen Außenisolierung 24 umgeben.

Über den Überlaufwehren 20a, 20b sind Verbindungen 26a, 26b ausgebildet, über welche die Glasschmelze bei einem entsprechenden Füllstand von einem Wannenbereich 14, 16, 18 zum anderen wechseln kann. Im Bereich der Verbindungen 26a, 26b sind elektrische Heizelektroden 28a, 28b ausgebildet, über welche der die Verbindungen passierende Volumenstrom an Glasschmelze (über die Viskosität) gesteuert werden kann.

Im ersten Wannenbereich 14 ist optional noch ein elektrisch- oder gasbetriebener Antemperbrenner 27 angeordnet, um das Antempern der Glasschmelze zu unterstützen. Über dem ersten Wannenbereich 14 ist eine Aufgabevorrichtung 30 angeordnet, über welche ihm ein Materialgemenge oder Glasbruch zugeführt wird.

Der Speicher 18 ist für den diskontinuierlichen Betrieb konzipiert, so dass der Füllstand dort stark variieren kann. Durch das schwankende Glasniveau im Speicher 18 ist eine ausreichende Zeitstandfestigkeit klassischer Glaskontaktmaterialien nicht gegeben. Der örtliche Wechsel der Position der Drei-Phasen-Grenze zwischen Gasraum, Schmelze und Isolierung/Ofenwand führt zu einer erhöhten Korrosion mineralischer Isolierstoffe wie z.B. AZS. Aus diesem Grund wird Molybdän oder ein anderes der oben genannten Metalle als Wannenauskleidung 32 eingesetzt, da dieser Werkstoff die geforderte chemische und Temperaturstabilität aufweist. Im Bereich des variierenden Füllstandes ist daher der Speicher 18 mit einer Molybdänschicht 32 ausgekleidet, um die Korrosion an der Dreiphasengrenze Schmelze/Wand/Atmosphäre zu verringern. Da Molybdän aber nicht oxidationsbeständig ist, wird der Ofenraum 13 der Glasschmelzwanne 12, insbesondere über dem Speicher 18 über eine Inertgaszufuhr 34 insbesondere mit Stickstoff inertisiert. Somit können nicht nur die Molybdänauskleidung sondern auch Heizelektroden aus Molybdän konstruktiv im Ofenraum 13 frei eingesetzt werden. Obwohl eine derartige Inertgaszufuhr in jedem Gasbereich über den Wannenbereichen vorgesehen werden kann, ist die Inertgaszufuhr 34 vorzugsweise zumindest in dem Gasraum über dem dritten Wannenbereich 18 für die Zwischenspeicherung angeordnet, da in diesen Wannenbereich 18 die Molybdänauskleidung 32 angeordnet ist. Im dritten Wannenbereich 18 ist auch eine Entnahmeeinrichtung 36 angeordnet, in deren Nähe ebenfalls eine Heizelektrode 38 zur Steuerung der Entnahmemenge angeordnet ist. Schließlich ist im dritten Wannenbereich noch ein Füllstandssensor 40 zur Füllstandsüberwachung und Produktionsregelung angeordnet, der mit einer Steuerung 42 des Glasofens 10 verbunden ist.

Die Steuerung 42 regelt die Aufgabevorrichtung 30, die auch eine Inertisierungsvorrichtung, d.h. eine Inertgas-Zufuhr und eine Vorrichtung zur Verdrängung des Sauerstoffs aus den Zwickeln der Schüttung (z.B. noch ungeschmolzenes Glasrohgut und/oder Glasscherben aus Recycling) umfasst. Die Steuerung 42 regelt somit die Gemengezufuhr in obiger Weise als auch die Entnahmemenge über die Entnahmeeinrichtung 36 und die zugehörige Heizelektrode 38. Weiterhin regelt sie über die Heizelektroden 28a, 28b die Temperatur in den einzelnen Wannenbereichen 14, 16, 18, als auch den zwischen den Wannenbereichen 14, 16, 18 fließenden Volumenstrom. Die elektrischen Heizelemente 22a, 22b, 22c sind zum Antempern des Glasofens vorgesehen und können in allen Wannenbereichen 14, 16, 18 angeordnet sein. Die Steuerung erhält dabei Rückmeldung von (nicht dargestellten) Temperatursensoren in den einzelnen Wannenbereichen als auch vom Füllstandssensor 40 im dritten Wannenbereich 18. In der Regel sind Füllstandssensoren auch in den anderen beiden Wannenbereichen 14, 16 angeordnet, die mit der Steuerung 42 verbunden sind.

Die Steuerung 42 ist über einen Dateneingang 44 mit einer Dateneingabevorrichtung 46, z.B. einem Desktop, mit einem Datenausgang 48 eines Energieanbieters oder Energiehändlers und mit einem sozialen Kommunikationsnetzwerk 50, z.B. dem Internet verbunden. Alternativ können somit Energiepreise über den Datenausgang 48 des Energieversorgers oder über das Kommunikationsnetz 50 abgerufen oder manuell an der Dateneingabevorrichtung eingegeben werden.

Die Steuerung 42 hat einen Speicherbereich 52 zur Abspeicherung von Energiepreisen mit einem korrespondierenden Erhebungszeitpunkt, eine Auswerteeinheit 54 zur Berechnung von Produktionsdaten unter Berücksichtigung der Energiepreise und eine Vorhersageeinheit 56 zur Speicherung/Berechnung von wahrscheinlichen Preisverläufen aufgrund von bisherigen Daten, z.B. zeitlich zyklische Verfügbarkeit von Solarstrom. Diese kann auch mit dem Dateneingang 44 verbunden sein.

Prinzipiell wird der alternative kontinuierliche und diskontinuierliche Betrieb in einem weitgehend CO2-neutralen Verfahren durch die beschriebene geometrische Dreiteilung der Glasschmelzwanne 12 in Wannenbereiche 14, 16, 18 oder Module entsprechend der Aufgaben Rauhschmelze / Läuterung / (Zwischen)Speicherung erzielt. Zur Vermeidung von Energieverlusten sind die drei Wannenbereiche 14, 16, 18 räumlich möglichst nah angeordnet, wodurch sie thermisch in Kontakt stehen und so die Wärmeverluste an die Umgebung minimieren.

Drei mögliche Anordnungen der Wannenbereiche 14, 16, 18, welche je nach Anlagengröße, gewünschtem Temperaturprofil und Speichervolumen energetische und qualitative Vorteile haben, sind in den Figuren 2a bis 2c gezeigt.

Wird zum Beispiel zur Läuterung eine besonders hohe Temperatur benötigt, so ist die "Kaskadenanordnung" der Wannenbereiche 14, 16, 18 gemäß Fig.1 und Fig. 2c zu bevorzugen, wo die drei Wannenbereiche 14, 16, 18 hintereinander angeordnet sind. In dieser Anordnung grenzen die geringsten Außenflächen an den Wannenbereich 16 für die Läuterung / Homogenisierung.

Ist hingegen die eine hohe Ausarbeitungstemperatur (oder Austrags- bzw. Abgabetemperatur) der Glasschmelze gewünscht, so kann gemäß Fig. 2a bei größeren Wannen der Wannenbereich für die Läuterung/Homogenisierung in zwei Segmente 16a, 16b geteilt werden, welche den Speicher 18 als Wärmeschutz flankieren.

Eine Mischung dieser Konzepte mit geringer Außenfläche und einer L-förmigen Ummantelung des Speichers 18 durch die beiden anderen Wannenbereiche 14, 16 ist in Fig. 2b gezeigt. Diese Anordnung vermeidet einerseits Energieverluste durch eine geringe Außenfläche, andererseits wird der Speicher 18 auf einer hohen Temperatur gehalten.

Der Glasofen 10 gemäß Fig. 1 funktioniert wie folgt. Dem Wannenbereich 14 für die Rauhschmelze werden Glasscherben und / oder Gemenge mittels der Aufgabevorrichtung 30 zugeführt und dann über Heizelemente 22a (Elektroden) aufgeschmolzen, bzw. angetempert. Diese Glasschmelze fließt über die Verbindung 26a in Form einer Tauchung über dem Überlaufwehr 20a in den Wannenbereich 16 für die Läuterung/Homogenisierung. Dort wird die Läuterung durchgeführt, wobei in der Schmelze verbliebene Blasen in Strömungsrichtung aus der Glasschmelze ausgetrieben werden. In diesem Wannenbereich 16 für die Läuterung strömt das Glas wieder nach oben und fließt dort über die Verbindung 26b über ein Überlaufwehr 20b in den Wannenbereich 18 für die Zwischenspeicherung. Bei dieser Anordnung ergibt sich der Vorteil der getrennten Gasräume zwischen Rauhschmelze und Homogenisierung, so dass die meisten Läutergase in dem Gasraum der Homogenisierung abgezogen werden können. Durch die Trennung der beiden Gasräume ist es möglich, die beim Erschmelzen anfallenden Alkaliendämpfe, HF, SO2 gezielt abzuführen, wodurch die Möglichkeit besteht, z.B. den durch die notwendige Inertisierung anfallende Spülgasstrom durch die Segmentierung des Glasofens in Wannenbereiche gezielt abzuführen. So wird der stärker belastete Gasstrom aus der Rauhschmelze nicht verdünnt und kann gezielt gereinigt werden, wohingegen der Gasstrom aus dem Speicher/Homogenisierung noch für die Verdrängung von O2 aus den Außenbereichen genutzt werden kann.

An den Wannenbereich 18 für die Zwischenspeicherung schließt sich die Entnahmeeinrichtung (Drain) 36 an, in dem die Entnahmemenge über eine zugeordnete induktive Heizelektrode 38 unter Ausnutzung der Temperaturabhängigkeit der Viskosität des Glases geregelt wird.

So kann, je nach Verfügbarkeit an regenerativer Energie, der Füllstand im Speicher 18 als Energiepuffer genutzt werden. Ist keine/wenig günstige bzw. regenerative Energie verfügbar, wird der Speicher geleert und kein Glas erschmolzen. Durch den variablen Füllstand muss der Einfluss des hydrostatischen Druckes im Speicher 18 auf die Entnahmemenge durch eine Temperaturregelung in der Entnahmeeinrichtung 36 kompensiert werden.

Das Speichervermögen an erschmolzenem Glas und Energie ist dabei so auf das Produktionsszenario abgestimmt, dass ein intelligentes Energiemanagement, welches das Verfügbarkeitsprofil am Strommarkt ausnutzt, die Zeiten bestimmt, wann Glas erschmolzen bzw. Energie gespeichert werden muss, ohne die Produktion einzuschränken. Hierfür verwendet die Steuerung die über den Dateneingang 44 erhaltenen Energiepreise bzw. Daten über die Energieverfügbarkeit, z.B. von regenerativer Energie, z. B. Solarstrom.

Um die in Wärme gespeicherte Energie im Glasofen 10 halten zu können, ist die Glasschmelzwanne 12 in einem geschlossenen Ofenraum 13 angeordnet und hat eine mehrschichtige, sehr gute Wärmeisolierung 24, durch die das Erkalten der Glasschmelzwanne 12 so verzögert wird, dass die Abkühlgeschwindigkeit zum einen nicht die Außenisolation 24 schädigt und zum anderen das Temperaturniveau bis zum nächsten Heizzyklus auf einem Niveau hält, von dem ausreichend schnell wieder angefahren werden kann.

Der erfindungsgemäße Glasofen 10 vereint somit eine ökonomische Betriebsweise mit der Option kontinuierlich und diskontinuierlich fahren zu können und das Vorhandensein regenerativer bzw. günstiger Energie zu berücksichtigen.

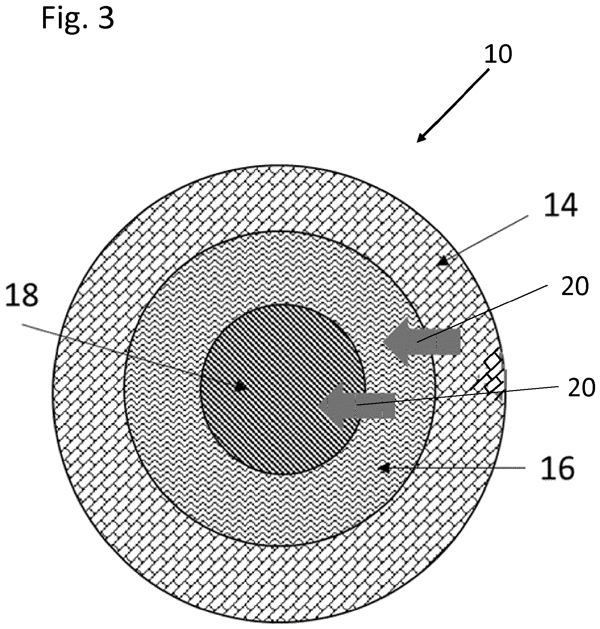

Fig. 3 zeigt eine alternative Ausführungsform eines runden Glasofens 10 mit drei zueinander konzentrischen Wannenbereichen. Dieser Glasofen ist energieoptimiert, weil die wärmeabstrahlende Außenfläche relativ zur Ofenkapazität minimiert ist. Die einzelnen Wannenbereiche wärmen sich durch die ineinander verschachtelte - in diesem Fall konzentrische - Anordnung gegenseitig, was zusätzlich Energieverluste durch Wärmeabstrahlung minimiert.

Die Erfindung ist nicht auf die beschriebenen Ausführungsbeispiele beschränkt, sondern kann innerhalb des Schutzbereichs der Patentansprüche variiert werden.

### Bezugszeichenliste:

- 10: Glasofen
- 12: Glasschmelzwanne
- 13: Geschlossener Ofenraum - Ofenbehälter
- 14: erster Wannenbereich - Wannenbereich für die Rauhschmelze
- 16: zweiter Wannenbereich - Wannenbereich für die Läuterung
- 18: dritter Wannenbereich - Wannenbereich für die Zwischenspeicherung - Speicher
- 20a,b: Abtrennungen - Überlaufwehre
- 22a,b,c: Heizelemente für die einzelnen Wannenbereiche
- 24: Außenisolierung
- 26a,b: Verbindungsbereiche über den Überlaufwehren zwischen den Wannenbereichen
- 27: Antemperbrenner
- 28a,b: Heizelektroden im Bereich der Verbindungen
- 30: Aufgabevorrichtung für Materialgemenge oder Glasbruch
- 32: Molybdänauskleidung für den dritten Wannenbereich
- 34: Inertgaszufuhr
- 36: Entnahmeeinrichtung - Drain
- 38: Heizelektrode für die Entnahmeeinrichtung
- 40: Füllstandssensor
- 42: Steuerung
- 44: Dateneingang - Datenport
- 46: Dateneingabevorrichtung
- 48: Datenausgang/Datenport eines Energieanbieters oder -händlers
- 50: soziales Kommunikationsnetzwerk - Internet
- 52: Speicherbereich für zeitbezogene Energiepreisdaten
- 54: Auswerteeinheit
- 56: Vorhersageeinheit

## Patentansprüche

1. Glasofen (10) mit mindestens einer Glasschmelzwanne (12) für den wahlweise kontinuierlichen oder diskontinuierlichen Betrieb mit räumlich getrennten und über Verbindungen (26a, 26b, 26c) miteinander verbundenen Wannenbereichen (14, 16, 18) für die Rauhschmelze, die Läuterung und die Zwischenspeicherung von erschmolzenem Glas, wobei alle Wannenbereiche (14, 16, 18) elektrische Heizelektroden (28a, 28b, 38) zur Beheizung aufweisen, und welcher Glasofen (10) weiterhin eine Steuerung (42) für die Regelung der Entnahmemenge und/oder für den Füllstand im Wannenbereich (18) für die Zwischenspeicherung aufweist, **dadurch gekennzeichnet, dass** der Glasofen gegenüber der Atmosphäre abgeschlossen ist, so dass Gasbereiche über den Wannenbereichen angeordnet sind, dass der Wannenbereich (18) für die Zwischenspeicherung der größte aller drei Wannenbereiche (14, 16, 18) ist, und dass die Steuerung (42) einen Dateneingang (44) für Energieverfügbarkeitsparameter und eine Verarbeitungseinheit (54) aufweist, die konzipiert ist, die über den Dateneingang (44) erhaltenen Daten zu Steuerdaten als Basis für die oben genannte Regelung auszuwerten, wobei die Steuerung konzipiert ist, während der Zeit günstiger Energiepreise den Wannenbereich (18) für die Zwischenspeicherung zu füllen und ihn während der Zeit ungünstiger Energiepreise zu leeren.

2. Glasofen nach Anspruch 1, **dadurch gekennzeichnet, dass** der Wannenbereich (18) für die Zwischenspeicherung mindestens zweimal, vorzugsweise mindestens dreimal so groß ist wie der größere der anderen Wannenbereiche (14, 16).

3. Glasofen nach Anspruch 1 oder 2, **dadurch gekennzeichnet, dass** die Steuerung auch für die Regelung der Heizleistung in den separaten Wannenbereichen (14, 16, 18) und/oder des über die Verbindungen (26a, 26b, 26c) zwischen den Wannenbereichen fließenden Volumenstroms an Glasschmelze konzipiert ist.

4. Glasofen nach Anspruch 1, 2 oder 3, **dadurch gekennzeichnet, dass** die Steuerung (42) einen Speicherbereich (52) mit mehreren Speicherplätzen für den Verlauf der Energieverfügbarkeitsparameter über einen bestimmten Zeitraum aufweist, als auch eine Vorhersageeinheit (56), die konzipiert ist, zu erwartenden zukünftige Energieverfügbarkeitsparameter aus dem bisherigen Verlauf der Energieverfügbarkeitsparameter abzuleiten.

5. Glasofen nach einem der vorhergehenden Ansprüche, **dadurch gekennzeichnet, dass** er eine Steuerung (42) aufweist, die mit einem Füllstandsensor (40) im Wannenbereich (18) für die Zwischenspeicherung verbunden ist.

6. Glasofen nach einem der vorhergehenden Ansprüche, **dadurch gekennzeichnet, dass** die Gasbereiche über den einzelnen Wannenbereichen voneinander separiert sind, und dass vorzugsweise eine eigene Gaszufuhr in jedem Gasbereich vorgesehen ist

7. Glasofen nach einem der vorhergehenden Ansprüche, **dadurch gekennzeichnet, dass** die Wannenbereiche rund, insbesondere kreisrund ausgebildet sind.

8. Glasofen nach einem der vorhergehenden Ansprüche, **dadurch gekennzeichnet, dass** die Wannenbereiche (14, 16, 18) ineinander verschachtelt sind, insbesondere konzentrisch zueinander angeordnet sind.

9. Glasofen nach einem der vorhergehenden Ansprüche, **dadurch gekennzeichnet, dass** zumindest der Wannenbereich (18) für die Zwischenspeicherung eine Mo-Auskleidung (32) aufweist.

10. Glasofen nach einem der vorhergehenden Ansprüche, **dadurch gekennzeichnet, dass** der Ofenraum (13) des Glasofens (10), insbesondere über dem Wannenbereich (18) für die Zwischenspeicherung mit einer Inertgaszufuhr (34) verbunden ist.

11. Glasofen nach einem der vorhergehenden Ansprüche, **dadurch gekennzeichnet, dass** zwischen den Wannenbereichen (14, 16, 18) angeordnete Trennwände (20) eine verglichen zu den Außenwänden des Glasofens höhere Wärmeleitfähigkeit aufweisen.

12. Glasofen nach einem der vorhergehenden Ansprüche, **dadurch gekennzeichnet, dass** die Wannenbereiche (14, 16, 18) über Tauch- bzw. Überlaufwehre (20) miteinander verbunden sind, die Verbindungsbereiche (26) definieren, deren Durchlassmenge über die Aufgabemenge steuerbar ist.

13. Glasofen nach einem der vorhergehenden Ansprüche, **dadurch gekennzeichnet, dass** der Wannenbereich (18) für die Zwischenspeicherung eine steuerbare Entnahmeeinrichtung (36) für die Glasschmelze aufweist.

14. Glasofen nach Anspruch 13, **dadurch gekennzeichnet, dass** die Entnahmeeinrichtung (36) für die Glasschmelze elektrisch beheizbar (38) und damit thermisch gesteuert ist.

15. Glasofen nach einem der vorhergehenden Ansprüche, **dadurch gekennzeichnet, dass** zumindest einer der Wannenbereiche (14, 16, 18) eine resistiv oder gasbetriebene Antemperheizung (27) enthält.

16. Verfahren zum Betreiben eines Glasofens nach einem der vorhergehenden Ansprüche, **dadurch gekennzeichnet, dass** die Entnahmemenge und/oder der Füllstand im Wannenbereich (18) für die Zwischenspeicherung in Abhängigkeit von den aktuellen Energieverfügbarkeitsparametern derart geregelt wird, dass der Wannenbereich für die Zwischenspeicherung während der Zeit günstiger Energiepreise gefüllt wird und während der Zeit ungünstiger Energiepreise geleert wird.

17. Verfahren nach Anspruch 16, **dadurch gekennzeichnet, dass** die Steuerung über einen Dateneingang Energieverfügbarkeitsparameter abruft, und die über den Dateneingang erhaltenen Daten zu Steuerdaten als Basis für die oben genannte Regelung auswertet.

18. Verfahren nach Anspruch 16 oder 17, **dadurch gekennzeichnet, dass** bei einem diskontinuierlichen Betrieb des Glasofens der Füllstand in dem Wannenbereich für die Zwischenspeicherung über eine resistiv oder induktiv beheizte Entnahmeeinrichtung (36) geregelt wird.

## Claims

1. Glass furnace (10) with at least one glass melting tank (12) for optionally continuous or discontinuous operation with spatially separated and via connections (26a, 26b, 26c) mutually connected tank areas (14, 16, 18) for the rough melting, the refining and the intermediate storage of molten glass, wherein all tank areas (14, 16, 18) have electrical heating electrodes (28a, 28b, 38) for heating, and which glass furnace (10) further has a control (42) for regulating the withdrawal quantity and/or for the filling level in the tank area (18) for the intermediate storage, **characterized in that** the glass furnace is sealed off from the atmosphere so that gas areas are arranged above the tank areas, that the tank area (18) for the intermediate storage is the largest of all three tank areas (14, 16, 18), and that the control (42) has a data input (44) for energy availability parameters and a processing unit (54) designed to evaluate the data obtained via the data input (44) into control data as a basis for the above-mentioned control, the control being designed to fill the tank area (18) for intermediate storage during the time of favourable energy prices and to empty it during the time of unfavourable energy prices.

2. Glass furnace according to claim 1, **characterized in that** the tank area (18) for the intermediate storage is at least twice, preferably at least three times as large as the larger of the other tank areas (14, 16).

3. Glass furnace according to claim 1 or 2, **characterized in that** the control is also designed for regulating the heating power in the separate tank areas (14, 16, 18) and/or for regulating the volume flow of molten glass flowing via the connections (26a, 26b, 26c) between the tank areas.

4. Glass furnace according to claim 1, 2 or 3, **characterized in that** the control (42) comprises a memory area (52) with several memory locations for the course of the energy availability parameters over a certain period of time, as well as a prediction unit (56) which is designed to derive expected future energy availability parameters from the previous course of the energy availability parameters.

5. Glass furnace according to any one of the preceding claims, **characterized in that** it comprises a control unit (42) connected to a level sensor (40) in the tank area (18) for the intermediate storage.

6. Glass furnace according to one of the preceding claims, **characterised in that** the gas zones above the individual tank zones are separated from one another, and **in that** a separate gas supply is preferably provided in each gas zone

7. Glass furnace according to one of the preceding claims, **characterized in that** the tank areas are round, in particular circular.

8. Glass furnace according to one of the preceding claims, **characterized in that** the tank areas (14, 16, 18) are nested inside one another, in particular are arranged concentrically with respect to one another.

9. Glass furnace according to one of the preceding claims, **characterized in that** at least the intermediate storage tank area (18) has a Mo-lining (32).

10. Glass furnace according to one of the preceding claims, **characterized in that** the furnace chamber (13) of the glass furnace (10), in particular above the intermediate storage tank area (18), is connected to an inert gas supply (34).

11. Glass furnace according to one of the preceding claims, **characterized in that** partition walls (20) arranged between the tank areas (14, 16, 18) have a higher thermal conductivity compared to the outer walls of the glass furnace.

12. Glass furnace according to one of the preceding claims, **characterized in that** the tank areas (14, 16, 18) are connected to one another by immersion- or overflow weirs (20) which define connecting regions (26) whose flow rate can be controlled by the feed rate.

13. Glass furnace according to one of the preceding claims, **characterized in that** the tank area (18) for the intermediate storage comprises a controllable removal device (36) for the molten glass.

14. Glass furnace according to claim 13, **characterized in that** the removal device (36) for the molten glass is electrically heatable (38) and thus thermally controlled.

15. Glass furnace according to one of the preceding claims, **characterized in that** at least one of the tank areas (14, 16, 18) contains a resistive or gas-operated annealing heater (27).

16. Method for operating a glass furnace according to one of the preceding claims, **characterized in that** the withdrawal quantity and/or the filling level in the intermediate storage tank area (18) is controlled as a function of the current energy availability parameters in such a way that the intermediate storage tank area is filled during the time of favourable energy prices and is emptied during the time of unfavourable energy prices.

17. The method according to claim 16, **characterised in that** the controller retrieves energy availability parameters via a data input and evaluates the data received via the data input into control data as a basis for the above-mentioned control.

18. The method according to claim 16 or 17, **characterised in that** during discontinuous operation of the glass furnace, the filling level in the tank area for intermediate storage is controlled via a resistively or inductively heated removal device (36).

## Revendications

1. Four à verre (10) comportant au moins une cuve de fusion du verre (12) pour le fonctionnement sélectivement continu ou discontinu avec des zones de cuve (14, 16, 18) séparées et reliées les unes aux autres par des liaisons (26a, 26b, 26c) pour le bain de verre brut, l'affinage et le stockage intermédiaire de verre fondu, dans lequel toutes les zones de cuve (14, 16, 18) présentent des électrodes de chauffage électriques (28a, 28b, 38) pour le chauffage, et ledit four à verre (10) présentant en outre une commande (42) pour la régulation de la quantité de prise et/ou pour le niveau de remplissage dans la zone de cuve (18) pour le stockage intermédiaire, **caractérisé en ce que** le four à verre est fermé vis-à-vis de l'atmosphère, de telle sorte que des zones de gaz sont disposées au-dessus des zones de cuve, **en ce que** la zone de cuve (18) pour le stockage intermédiaire est la plus grande des trois zones de cuve (14, 16, 18), et **en ce que** la commande (42) présente une entrée de données (44) pour des paramètres de disponibilité de l'énergie et une unité de traitement (54), qui est conçue pour interpréter les données obtenues par le biais de l'entrée de données (44) en données de commande comme base pour la régulation susmentionnée, la commande étant conçue pour, pendant la période où les tarifs de l'énergie sont avantageux, remplir la zone de cuve (18) pour le stockage intermédiaire et la vider pendant la période où les tarifs de l'énergie sont désavantageux.

2. Four à verre selon la revendication 1, **caractérisé en ce que** la zone de cuve (18) pour le stockage intermédiaire est au moins deux fois, de préférence au moins trois fois plus grande que la plus grande des autres zones de cuve (14, 16).

3. Four à verre selon la revendication 1 ou 2, **caractérisé en ce que** la commande est également conçue pour la régulation de la puissance de chauffage dans les zones de cuve (14, 16, 18) séparées et/ou du débit volumétrique de verre fondu s'écoulant entre les zones de cuve par le biais des liaisons (26a, 26b, 26c).

4. Four à verre selon la revendication 1, 2 ou 3, **caractérisé en ce que** la commande (42) présente une zone de mémoire (52) avec plusieurs emplacements de mémoire pour la variation des paramètres de disponibilité de l'énergie sur une période donnée, ainsi qu'une unité de prévision (56), qui est conçue pour dériver des paramètres futurs de disponibilité de l'énergie à prévoir à partir de la variation des paramètres de disponibilité de l'énergie s'étant produite jusqu'alors.

5. Four à verre selon l'une des revendications précédentes, **caractérisé en ce qu'**il présente une commande (42), qui est reliée à un capteur de niveau de remplissage (40) dans la zone de cuve (18) pour le stockage intermédiaire.

6. Four à verre selon l'une des revendications précédentes, **caractérisé en ce que** les zones de gaz au-dessus des différentes zones de cuve sont séparées les unes des autres, et **en ce qu'**une alimentation en gaz distincte est de préférence prévue dans chaque zone de gaz.

7. Four à verre selon l'une des revendications précédentes, **caractérisé en ce que** les zones de cuve sont réalisées rondes, en particulier circulaires.

8. Four à verre selon l'une des revendications précédentes, **caractérisé en ce que** les zones de cuve (14, 16, 18) sont imbriquées les unes dans les autres, en particulier disposées de manière concentrique les unes par rapport aux autres.

9. Four à verre selon l'une des revendications précédentes, **caractérisé en ce qu'**au moins la zone de cuve (18) pour le stockage intermédiaire présente un revêtement en Mo (32).

10. Four à verre selon l'une des revendications précédentes, **caractérisé en ce que** la chambre de four (13) du four à verre (10) est reliée à une arrivée de gaz inerte (34) en particulier au-dessus de la zone de cuve (18) pour le stockage intermédiaire.

11. Four à verre selon l'une des revendications précédentes, **caractérisé en ce que** des parois de séparation (20) disposées entre les zones de cuve (14, 16, 18) présentent une conductibilité thermique supérieure par rapport aux parois extérieures du four à verre.

12. Four à verre selon l'une des revendications précédentes, **caractérisé en ce que** les zones de cuve (14, 16, 18) sont reliées les unes aux autres par le biais de barrages immergés ou déversoirs de trop-plein (20), qui définissent des zones de liaison (26) dont le débit de passage peut être commandé par le biais du débit d'alimentation.

13. Four à verre selon l'une des revendications précédentes, **caractérisé en ce que** la zone de cuve (18) pour le stockage intermédiaire présente un dispositif de prise (36) pouvant être commandé pour le verre fondu.

14. Four à verre selon la revendication 13, **caractérisé en ce que** le dispositif de prise (36) pour le verre fondu peut être chauffé électriquement (38) et est ainsi commandé de manière thermique.

15. Four à verre selon l'une des revendications précédentes, **caractérisé en ce qu'**au moins une des zones de cuve (14, 16, 18) possède un chauffage de mise en température (27) résistif ou fonctionnant au gaz.

16. Procédé de fonctionnement d'un four à verre selon l'une des revendications précédentes, **caractérisé en ce que** la quantité de prise et/ou le niveau de remplissage dans la zone de cuve (18) pour le stockage intermédiaire est régulé(e) en fonction des paramètres actuels de disponibilité de l'énergie de telle manière que la zone de cuve pour le stockage intermédiaire est remplie pendant la période où les tarifs de l'énergie sont avantageux et vidée pendant la période où les tarifs de l'énergie sont désavantageux.

17. Procédé selon la revendication 16, **caractérisé en ce que** la commande extrait des paramètres de disponibilité de l'énergie par le biais d'une entrée de données, et interprète les données obtenues par le biais de l'entrée de données en données de commande comme base pour la régulation susmentionnée.

18. Procédé selon la revendication 16 ou 17, **caractérisé en ce que**, dans le cas d'un fonctionnement discontinu du four à verre, le niveau de remplissage dans la zone de cuve pour le stockage intermédiaire est régulé par le biais d'un dispositif de prise (36) chauffé de manière résistive ou inductive.
